# FASCICULE DE BREVET EUROPEEN

(11) **EP 1 588 897 B1**
(45) Date de publication et mention de la délivrance du brevet: **14.03.2007**
(21) Numéro de dépôt: 05290856.3
(22) Date de dépôt: 18.04.2005
(51) Int. Cl.: B60R 9/058

(54) **Elément de fixation et véhicule correspondant**
Haltemittel und zugehöriges Fahrzeug
Fixing device and vehicle having same

(30) Priorité: 20.04.2004 FR 0404179
(43) Date de publication de la demande: 26.10.2005
(73) Titulaire: Peugeot Citroën Automobiles S.A., 78140 Vélizy Villacoublay (FR)
(72) Inventeur: Guihaire, Stéphane, 92210 Saint Cloud (FR); Moreau, Ludovic, 94400 Vitry sur Seine (FR)
(74) Mandataire: Domenego, Bertrand

(56) Documents cités:
- EP-A- 1 431 124
- DE-A- 3 729 641
- DE-A- 4 105 741
- DE-U- 8 904 069
- US-A- 4 997 117

## Description

La présente invention concerne un ensemble de fixation selon le préambule de la revendication 1. Un tel ensemble est connu du document DE 37 29 641.

Elle s'applique notamment aux dispositifs de fixation de barres de porte charge à la structure d'un véhicule automobile.

On connaît des dispositifs de fixation de barres de porte charge.

Un tel dispositif est décrit dans le document FR-A-2 832 369.

Le dispositif de ce document comprend deux éléments de fixation complémentaires, dont un premier est fixé à la structure du véhicule et un second est fixé sur la barre de porte charge.

Le premier élément de fixation est un rail creux vissé sur la structure du véhicule. Lors du montage, le rail doit être orienté de manière prédéterminée. Ce rail de fixation est difficile à fabriquer et à monter en raison de sa forme complexe.

D'autres dispositifs de fixation sont connus par les documents FR-A-2 752 793; US-B-6,419,134; WO-A-95/19897; US-A-5,871,190. Les éléments de fixation de ces documents ont également une forme complexe et sont difficiles à fabriquer et à monter.

La présente invention a pour but de pallier les inconvénients cités, et de proposer un élément de fixation qui soit plus facile à fabriquer et à monter sur la structure du véhicule.

A cet effet l'invention a pour objet un ensemble tel que défini par la revendication 1.

Selon des modes particuliers de réalisation, l'invention comporte l'une ou plusieurs des caractéristiques enumérée dans les revendications 2 à 6.

L'invention a en outre pour objet un véhicule automobile tel que défini par la revendication 7.

Selon des modes de réalisation particuliers, le véhicule comporte l'une ou plusieurs des caractéristiques des revendications 8 et 9.

L'invention sera mieux comprise à la lecture de la description qui va suivre, donnée uniquement à titre d'exemple et faite en se référant aux dessins annexés, sur lesquels :
- la Figure 1 est une vue en perspective d'une partie d'un véhicule équipée d'un élément de fixation selon l'invention;
- la Figure 2 est une vue en coupe selon le plan II de la Figure 1, à plus grande échelle;
- la Figure 3 est une vue en coupe selon le plan III-III s'étendant perpendiculairement à celui de la Figure 2, représentant en outre un élément de fixation complémentaire; et
- la Figure 4 montre l'élément de fixation en perspective.

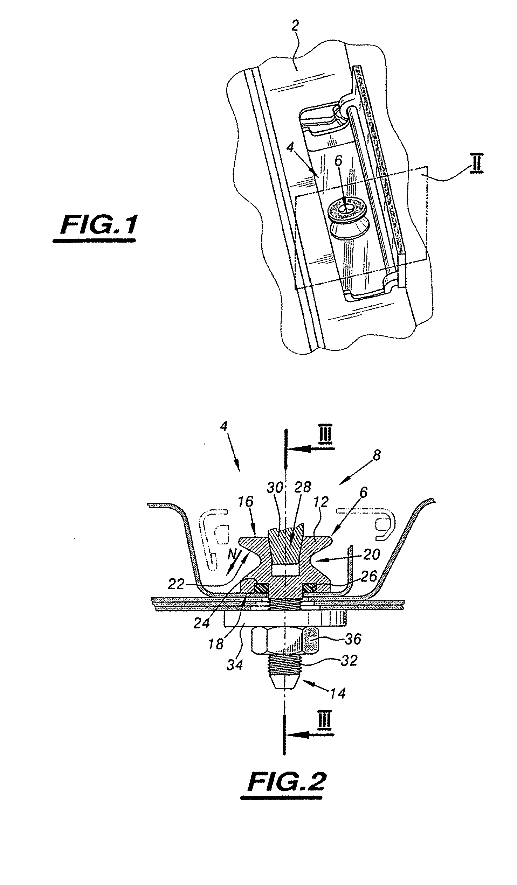

Sur la Figure 1 est représentée en perspective, la structure d'un véhicule automobile, désignée par la référence générale 2.

La structure 2 comporte un évidement 4 embouti de forme rectangulaire dans lequel est fixé un élément de fixation 6 d'un accessoire sur la structure 2.

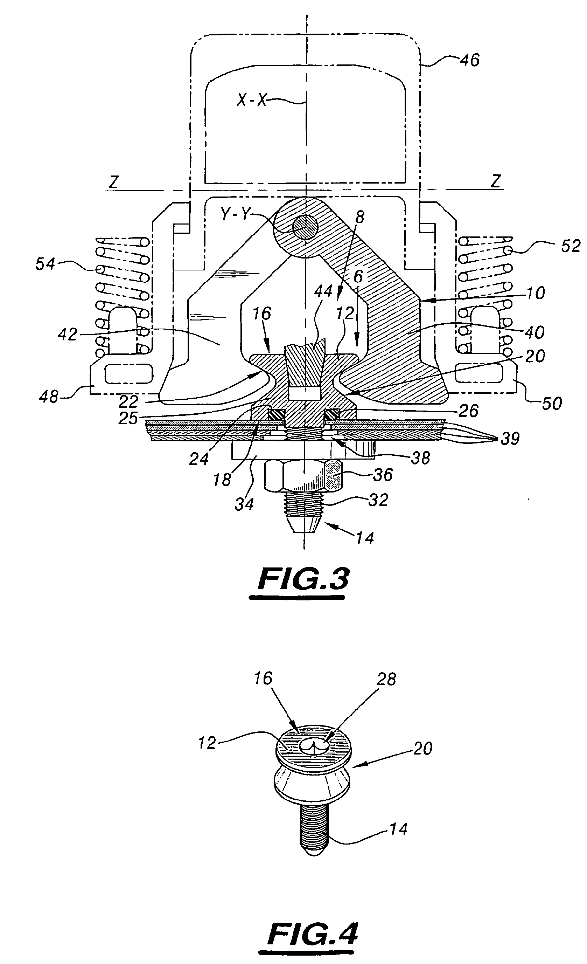

L'élément de fixation 6 fait partie d'un ensemble de fixation 8, qui comprend par ailleurs un élément de fixation complémentaire 10 relié à l'accessoire non représenté devant être fixé sur la structure 2 (voir Figure 3).

L'élément de fixation 6 comporte une tête de fixation 12 et un corps de fixation 14 biconique ou en forme de diabolo. Le corps de fixation 14 est solidaire de la tête 12. De préférence, le corps de fixation 14 et la tête de fixation 12 sont fabriqués en une seule pièce monobloc.

La tête 12 a une forme de révolution autour d'un axe central X-X et comporte une première surface frontale 16 dirigée à l'opposée du corps de fixation 14 ainsi qu'une seconde surface frontale 18 dirigée vers le corps de fixation 14. Les deux surfaces frontales 16, 18 sont planes et s'étendent perpendiculairement par rapport à l'axe X-X. En outre, les contours extérieurs, vus suivant l'axe central, des deux surfaces frontales sont identiques et coïncident.

La tête de fixation 12 comporte par ailleurs une gorge annulaire 20 qui a, en section médiane, une forme de V et qui est ouverte radialement vers l'extérieur. Cette gorge 20 forme une surface de coopération tronconique 22, sur laquelle s'applique l'élément de fixation complémentaire 10 à l'état fixé. En d'autres termes, la surface de coopération 22 a une normale N qui a une composante dirigée radialement vers l'extérieur par rapport à l'axe central X-X. La normale N a une autre composante dirigée vers le corps de fixation 14.

Grâce à cette forme de révolution, l'élément de fixation 6 peut être fixé sur la structure 2 du véhicule dans n'importe quelle position angulaire autour de l'axe X-X. Le montage est donc simple. De même, la surface de révolution 22 facilite la fabrication de l'élément 6.

La tête de fixation 12 comporte en outre un évidement en forme de décrochage 24 formant un rebord axial annulaire 25. Un joint d'étanchéité 26 annulaire est disposé dans l'évidement 24. Le joint d'étanchéité 26 est maintenu radialement entre la tête de fixation 12 et le corps de fixation 14 par le rebord 25. Le joint d'étanchéité 26 est en un matériau qui résiste à une température d'au moins 175°C, par exemple en matière plastique contenant du polyéthylène.

La tête de fixation 12 comporte par ailleurs un creux d'entraînement 28 ménagé dans la surface 16 (voir Figure 4). Le creux 28 a une forme de six-pans creux. Lors du montage de l'élément 6, un outil 30 de forme complémentaire s'engage dans le creux 28 (cf. Figure 2) et entraîne l'élément 6 en rotation.

Le corps de fixation 14 est une tige munie d'un filetage 32.

L'élément de fixation 6 est fixé sur la structure 2 par une rondelle 34 enfilée sur le corps de fixation 14 et par un écrou 36 vissé sur le filetage 32.

A l'état monté tel que montré sur la Figure 3, le corps de fixation s'étend à travers un trou 38 ménagé dans la structure 2. La structure 2, comprend de manière avantageuse plusieurs couches 39 de tôle superposées.

Comme illustré sur la Figure 3, l'élément de fixation complémentaire 10 comporte deux mâchoires 40, 42 et un doigt de centrage 44. Les deux mâchoires 40, 42 sont mobiles en rotation autour d'un axe de pivotement Y-Y s'étendant perpendiculairement à la direction longitudinale du véhicule, à l'état monté.

L'élément de fixation 10 comporte en outre une manette de verrouillage 46 et deux coulisseaux bloqueurs 48, 50 mobiles en translation selon l'axe X-X. La manette 46 est mobile en rotation autour d'un axe Z-Z s'étendant perpendiculairement aux axes X-X et Y-Y.

Les coulisseaux 48, 50 sont mobiles entre une position supérieure de libération des mâchoires 40, 42 et une position inférieure de blocage des mâchoires, représentée sur la Figure 3. Les coulisseaux 48, 50 sont sollicités vers leur position de blocage par deux ressorts 52, 54, et peuvent être amenés dans leurs positions de libération par la manette 46, à l'encontre de la force des ressorts 52, 54.

A l'état fixé de l'accessoire, le doigt de centrage 44 s'étend dans le creux d'entraînement 28, et les deux mâchoires 40, 42 s'appliquent contre la surface 22. L'élément 10 est fixé à une barre de toit de porte-charge.

L'élément de fixation 6 selon l'invention présente de nombreux avantages.

Premièrement, il permet l'adaptation de la structure 2 du véhicule à un système de barres porte charge à bridage rapide.

Deuxièmement, l'élément 6 peut s'indexer sur la structure 2 suivant les trois axes du véhicule.

Un autre avantage réside dans le fait qu'il peut être fixé sans contrainte angulaire autour de l'axe X-X.

De plus, il intègre l'étanchéité de la liaison entre l'élément de fixation 6 et la structure 2.

Grâce au joint 26 résistant à des températures élevées, il permet de passer la structure 2 équipée de l'élément de fixation en bain de cataphorèse.

De plus, l'élément 6 est peu encombrant.

Finalement, il est avantageusement conforme à la norme DIN 75 302.

## Revendications

1. Ensemble de fixation comprenant
- un élément de fixation d'un accessoire sur la structure d'un véhicule automobile, et
- un élément de fixation complémentaire (10),
l'élément de fixation comportant un corps de fixation (14) à la structure (2) du véhicule et une tête de fixation (12) munie d'une surface de coopération (22) avec l'élément de fixation complémentaire (10) porté par l'accessoire à fixer, la surface de coopération (22) ayant une forme de révolution autour d'un axe central (X-X), la tête de fixation (12) comportant une première surface frontale (16), qui est dirigée à l'opposé du corps de fixation (14), le corps de fixation (14) étant solidaire de la tête de fixation (12), **caractérisé en ce que**
la tête de fixation (12) comporte un creux d'entraînement (28) en rotation ménagée dans ladite première surface frontale (16), **en ce que**
le corps de fixation (14) comporte un filetage (32), et **en ce que**
l'élément de fixation complémentaire comporte deux mâchoires (40, 42) destinées à être appliquées contre la surface (22) de coopération et un doigt de centrage (44) apte à s'étendre dans le creux d'entraînement.

2. Ensemble de fixation selon la revendication 1, **caractérisé en ce que** la surface de coopération (22) a une normale (N) ayant une composante dirigée radialement vers l'extérieur de l'axe central (X-X).

3. Ensemble de fixation selon la revendication 1 ou 2, **caractérisé en ce que** la surface de coopération (22) est formée par une gorge annulaire (20) ménagée dans la tête de fixation (12).

4. Ensemble de fixation selon la revendication 3, **caractérisé en ce que** la gorge annulaire (20) a une section médiane sensiblement en forme de V.

5. Ensemble de fixation selon l'une quelconque des revendications précédentes, **caractérisé en ce que** la tête de fixation (12) comporte une seconde surface frontale (18) qui est dirigée vers le corps de fixation (14) et qui s'étend sensiblement perpendiculairement à l'axe central (X-X), **en ce qu'**un évidement annulaire (24) est ménagé dans ladite seconde surface frontale (18), et **en ce qu'**un joint d'étanchéité (26) est disposé dans l'évidement annulaire (24).

6. Ensemble de fixation selon la revendication 5, **caractérisé en ce que** les contours extérieurs, vus suivant l'axe central (X-X), des deux surfaces frontales (16, 18) sont identiques et coïncident.

7. Véhicule automobile comprenant une structure de véhicule (2) et un ensemble de fixation d'un accessoire sur la structure de véhicule qui est fixé sur la structure (2), **caractérisé en ce que** l'ensemble de fixation est un ensemble selon l'une quelconque des revendications précédentes, le corps de fixation de l'élément de fixation faisant saillie par rapport à la structure du véhicule.

8. Véhicule selon la revendication 7, **caractérisé en ce qu'**il comporte en outre un accessoire muni de l'élément de fixation complémentaire (10), et **en ce que** les mâchoires (40, 42) sont adaptées pour coopérer avec la surface de coopération (22) en vue de fixer l'accessoire sur la structure du véhicule.

9. Véhicule selon la revendication 8, **caractérisé en ce que** l'accessoire est une barre de toit porte-charge.

## Claims

1. Fixing assembly comprising
- a fixing element for fixing an accessory on the structure of a motor vehicle, and
- a complementary fixing element (10),
the fixing element having a body (14) for fixing to the structure (2) of the vehicle and a fixing head (12) provided with a surface (22) for cooperating with the complementary fixing element (10) carried by the accessory to be fixed, the cooperating surface (22) having a shape of revolution about a central axis (X-X), the fixing head (12) having a first frontal surface (16), which is directed away from the fixing body (14), the fixing body (14) being integral with the fixing head (12), **characterised in that** the fixing head (12) has a hollow (28) for driving in rotation provided in the said first frontal surface (16), **in that**
the fixing body (14) has a thread (32), and **in that**
the complementary fixing element has two jaws (40, 42) intended to be applied against the cooperating surface (22) and a centring finger (44) capable of extending into the driving hollow.

2. Fixing assembly according to Claim 1, **characterised in that** the cooperating surface (22) has a normal (N) having a component directed radially outwards from the central axis (X-X).

3. Fixing assembly according to Claim 1 or 2, **characterised in that** the cooperating surface (22) is formed by an annular groove (20) provided in the fixing head (12).

4. Fixing assembly according to Claim 3, **characterised in that** the annular groove (20) has a substantially V-shaped median section.

5. Fixing assembly according to any one of the preceding claims, **characterised in that** the fixing head (12) has a second frontal surface (18) which is directed towards the fixing body (14) and which extends substantially perpendicularly to the central axis (X-X), **in that** an annular recess (24) is provided in the said second frontal surface (18), and **in that** a seal (26) is arranged in the annular recess (24).

6. Fixing assembly according to Claim 5, **characterised in that** the outer contours, seen along the central axis (X-X), of the two frontal surfaces (16, 18) are identical and coincide.

7. Motor vehicle comprising a vehicle structure (2) and an assembly for fixing an accessory on the vehicle structure which is fixed on the structure (2), **characterised in that** the fixing assembly is an assembly according to any one of the preceding claims, the fixing body of the fixing element projecting with respect to the structure of the vehicle.

8. Vehicle according to Claim 7, **characterised in that** it further has an accessory equipped with the complementary fixing element (10), and **in that** the jaws (40, 42) are adapted to cooperate with the cooperating surface (22) in order to fix the accessory on the structure of the vehicle.

9. Vehicle according to Claim 8, **characterised in that** the accessory is a load-carrying roof bar.

## Patentansprüche

1. Befestigungsvorrichtung, enthaltend:
- ein Befestigungselement zur Befestigung eines Zubehörteils auf dem Aufbau eines Kraftfahrzeugs, und
- ein komplementäres Befestigungselement (10),
wobei das Befestigungselement einen Befestigungskörper (14) zur Befestigung an dem Aufbau (2) des Kraftfahrzeugs und einen Haltekopf (12) aufweist, der mit einer Zusammenwirkfläche (22) mit dem komplementären Befestigungselement (10), welches von dem zu befestigenden Zubehörteil getragen ist, versehen ist,
wobei die Zusammenwirkfläche (22) eine Rotationsgestalt um eine zentrale Achse (X-X) aufweist, wobei der Haltekopf (12) eine erste Stirnfläche (16) aufweist, welche zur Gegenseite des Befestigungskörpers (14) ausgerichtet ist, wobei der Befestigungskörper (14) aus einem Stück mit dem Haltekopf (12) ausgebildet ist, **dadurch gekennzeichnet, dass**
der Haltekopf (12) eine Antriebsausnehmung (28) zum Aufbringen einer Drehbewegung aufweist, welche in der ersten Stirnfläche (16) vorgesehen ist, dass
der Befestigungskörper (14) ein Gewinde (32) aufweist und dass das komplementäre Befestigungselement zwei Klemmbacken (40, 42), welche zur Anlage an die Zusammenwirkfläche (22) vorgesehen sind, und einen Zentrierzapfen (44) aufweist, welcher zum Einsatz in die Antriebsausnehmung geeignet ist, aufweist.

2. Befestigungsvorrichtung nach Anspruch 1, **dadurch gekennzeichnet, dass** die Zusammenwirkfläche (22) eine Normale (N) mit einer Komponente aufweist, die von der zentralen Achse (X-X) radial nach außen gerichtet ist.

3. Befestigungsvorrichtung nach Anspruch 1 oder 2, **dadurch gekennzeichnet, dass** die Zusammenwirkfläche (22) durch eine ringförmige Kehle (20) gebildet ist, welche in dem Haltekopf (12) vorgesehen ist.

4. Befestigungsvorrichtung nach Anspruch 3, **dadurch gekennzeichnet, dass** die ringförmige Kehle (20) einen mittleren Abschnitt aufweist, welcher im Wesentlichen V-förmig ausgebildet ist.

5. Befestigungsvorrichtung nach einem der vorhergehenden Ansprüche, **dadurch gekennzeichnet, dass** der Haltekopf (12) eine zweite Stirnfläche (18) aufweist, welche zu dem Befestigungskörper (14) gerichtet ist und welche sich im Wesentlichen senkrecht zu der zentralen Achse (X-X) erstreckt, dass eine ringförmige Aussparung (24) in dieser zweiten Stirnfläche (18) vorgesehen ist und dass eine Dichtung (26) in der ringförmigen Aussparung (24) angeordnet ist.

6. Befestigungsvorrichtung nach Anspruch 5, **dadurch gekennzeichnet, dass** die äußeren Konturen, gesehen entlang der zentralen Achse (X-X), der beiden Stirnflächen (16, 18) identisch und deckungsgleich sind.

7. Kraftfahrzeug, welches einen Fahrzeugaufbau (2) und eine Befestigungsvorrichtung zur Befestigung eines Zubehörteils auf dem Fahrzeugaufbau, welche auf dem Aufbau (2) befestigt ist, aufweist, **dadurch gekennzeichnet, dass** die Befestigungsvorrichtung eine Vorrichtung nach einem der vorhergehenden Ansprüche ist, wobei der Befestigungskörper des Befestigungselementes in Bezug auf den Fahrzeugaufbau hervorsteht.

8. Fahrzeug nach Anspruch 7, **dadurch gekennzeichnet, dass** es weiterhin ein Zubehörteil aufweist, welches mit dem komplementären Befestigungselement (10) ausgerüstet ist, und dass die Klemmbacken (40, 42) zur Zusammenwirkung mit der Zusammenwirkfläche (22) zu dem Zweck der Befestigung des Zubehörbauteils auf dem Fahrzeugaufbau angepasst sind.

9. Fahrzeug nach Anspruch 8, **dadurch gekennzeichnet, dass** das Zubehörbauteil eine Stange eines Dachlastträgers bzw. Dachgepäckträgers ist.
